# FASCICULE DE BREVET EUROPEEN

(11) **EP 3 470 260 B1**
(45) Date de publication et mention de la délivrance du brevet: **31.08.2022**
(21) Numéro de dépôt: 17306400.7
(22) Date de dépôt: 16.10.2017
(51) Int. Cl.: B60N 2/02, B60N 2/06, B60N 2/18, B60N 2/22, B60N 2/42, B60N 2/00

(54) **SYSTÈME DE GESTION DES RÉGLAGES DE SIÈGE DANS UN VÉHICULE**
STEUERUNGSSYSTEM DER EINSTELLUNGEN EINES SITZES IN EINEM FAHRZEUG
SYSTEM FOR MANAGING SEAT ADJUSTMENTS IN A VEHICLE

(43) Date de publication de la demande: 17.04.2019
(73) Titulaire: FAURECIA Sièges d'Automobile, 92000 Nanterre (FR)
(72) Inventeur: PEDRONNO, Philiippe, 91460 MARCOUSSIS - FRANCE (FR); JUDIC, Jean-Marc, 78470 SAINT REMY LES CHEVREUSE (FR)
(74) Mandataire: Plasseraud IP

(56) Documents cités:
- EP-A2- 1 117 557
- US-A- 4 797 824
- US-A- 5 670 853
- US-A1- 2016 221 475

## Description

La présente invention est relative aux sièges de véhicule, notamment pour des véhicules automobiles soumis à des normes de sécurité passive et de protection des occupants.

Plus précisément il s'agit d'un système de gestion des positions de siège dans un tel véhicule, dans le contexte où au moins un siège présente des possibilités de réglages étendus, par exemple un réglage longitudinal, un large réglage d'inclinaison de dossier et le cas échéant d'autres mouvements comme l'inclinaison de l'assise.

On connait des sièges qui des proposent de larges possibilités de réglage en fonction de la diversité des personnes qui peuvent être amenées à utiliser les sièges, mais il s'avère que certains réglages ne sont pas optimisés du point de vue de la sécurité.

Par ailleurs, les documents US5670853, EP1117557 et US4797824 sont connus.

Il est apparu un besoin pour proposer un système de siège pour véhicule qui autorise des possibilités de réglage très étendu sans pour autant diminuer les niveaux de protection que procurent le(s) siège(s) à ses occupants, et qui contribue à respecter les normes et prescriptions de protection des occupants.

À cet effet, il est donc proposé un système pour véhicule comprenant au moins un siège d'intérêt, étant un siège avant du véhicule, et une unité de commande (5), le siège d'intérêt comprenant au moins deux mouvements de réglage motorisés, à savoir un mouvement de réglage longitudinal (MX), et un mouvement de réglage d'inclinaison de dossier (Mβ), les différentes possibilités de réglages définissant chacune une posture pour un occupant (OCC) du siège, l'occupant du siège d'intérêt présentant des mesures anthropométriques personnelles,
le système étant caractérisé en ce qu'il est conforme à la revendication 1.

Grâce à ces dispositions, certaines configurations sous-optimales en termes de sécurité peuvent être évitées. Notamment, on peut éviter l'effet toboggan si le dossier est trop incliné. Certains réglages longitudinaux peuvent aussi être proscrits s'ils ne sont pas compatibles avec la morphologie de l'occupant et les conditions opérationnelles optimales des systèmes de protection passive. Il s'est avère un effet que les différents moyens de protection, e.g. sacs gonflables et ceintures de sécurité, sont d'autant plus efficaces que l'occupant se trouve dans une posture assise normale et que certaines distances et écartements sont respectés. La gestion du premier domaine de postures exposé ci-dessus permet de maximiser l'efficacité des différents moyens de protection de sécurité passive, et ceci de manière personnalisée vis-à-vis de l'occupant du siège.

Il est ainsi proposé un système pour véhicule comprenant au moins un siège d'intérêt, étant un siège avant du véhicule, et une unité de commande, le siège d'intérêt comprenant au moins deux mouvements de réglage motorisés, à savoir un mouvement de réglage longitudinal (MX), et un mouvement de réglage d'inclinaison de dossier (Mβ), les différentes possibilités de réglages définissant chacune une posture pour un occupant (OCC) du siège, l'occupant du siège d'intérêt présentant des mesures anthropométriques personnelles,
dans lequel il est prévu la mise à disposition par d'autres unités du véhicule d'un ensemble d'informations (EC), ledit ensemble d'informations comprenant au moins la vitesse instantanée du véhicule (VV),
le système étant caractérisé en ce qu'il est déterminé, pour chaque siège d'intérêt (conducteur et/ou passager) au moins un premier domaine de postures (D1),
ce premier domaine définissant un ensemble de postures recommandées de sécurité pour parer à un événement de sécurité passive pour l'occupant (OCC) installé dans le siège,
ce premier domaine étant défini en temps réel, en fonction des conditions actuelles contextuelles connues de l'ensemble d'informations (EC), des mesures anthropométriques, et des caractéristiques intrinsèques du siège,
et en ce que il est prévu, dans le cas où la posture courante se trouve en dehors du premier domaine de postures, une correction automatique pour revenir à l'intérieur du premier domaine de postures.

Grâce à ces dispositions, certaines configurations sous-optimales en termes de sécurité peuvent être évitées. Notamment, on peut éviter l'effet toboggan si le dossier est trop incliné. Certains réglages longitudinaux et certaines inclinaisons peuvent aussi être proscrits lorsque le véhicule roule à vive allure. Comme évoqué plus haut les différents moyens de protection, e.g. sacs gonflables et ceintures de sécurité, sont d'autant plus efficaces que l'occupant se trouve dans une posture assise normale et que certaines distances et écartements sont respectés, ce d'autant plus que la vitesse instantanée est élevée au moment de l'impact éventuel. La gestion du premier domaine de postures exposé ci-dessus permet de maximiser l'efficacité des différents moyens de protection de sécurité passive, et ceci de manière contextuelle et personnalisée vis-à-vis de l'occupant du siège. On remarque que le premier domaine de postures D1 évolue dynamiquement avec la vitesse du véhicule.

Dans divers modes de réalisation de l'invention, on peut éventuellement avoir recours en outre à l'une et/ou à l'autre des dispositions suivantes, prises isolément ou en combinaison.

Selon un aspect particulier, il peut être prévu, dans le cas où la posture courante se trouve à l'intérieur du premier domaine de postures, une interdiction de mouvement conduisant à sortir dudit premier domaine de postures. Moyennant quoi, pour certaines données anthropométriques et/ou conditions contextuelles, le système interdit à l'utilisateur de choisir des réglages dans certaines plages d'amplitude qui ne sont pas compatibles avec des postures propices à la protection des occupants.

Selon un aspect particulier, le premier domaine de postures est redéfini en permanence en temps réel par l'unité de commande. Moyennant quoi, si les conditions contextuelles permettent des réglages d'amplitude large alors elles sont autorisées sans délai et le premier domaine de postures est étendu, et à l'inverse si les conditions contextuelles deviennent plus problématiques par rapport au risque accidentel, alors le premier domaine de postures est restreint. L'adaptation du domaine préconisé des postures est ainsi faite en temps réel. L'unité de commande est à même de décider et d'agir en fonction de la détermination du premier domaine de postures.

Selon un aspect particulier, le premier domaine de postures peut être défini comme un volume enveloppe dans l'espace des deux mouvements de réglage ou plus. L'unité de commande peut ainsi gérer sous forme de cartographie l'ensemble des postures autorisées à l'intérieur du premier domaine. La notion de « volume » doit être interprétée largement ici c'est-à-dire une surface en deux dimensions, un volume classique en trois dimensions et des « hypers-volumes » dès lors qu'on dépasse trois dimensions (c'est-à-dire quatre mouvements motorisés ou plus).

Selon un aspect particulier, l'unité de commande est configurée pour commander les motorisations des mouvements du siège en fonction de commandes manuelles faites par le conducteur et en fonction du premier domaine de postures. Ceci permet de prévoir soit un avertissement sans correction imposée, soit une correction imposée effectuée par l'unité de commande, soit encore une interdiction de dépasser les limites du premier domaine. C'est l'unité de commande qui prend les décisions et qui commande directement les moteurs ce qui procure une très bonne réactivité.

Selon un aspect particulier, le siège peut être équipé en outre d'une fonction d'inclinaison d'assise (Mα), de préférence motorisée. Dans ces conditions, le premier domaine des postures comprend en outre une dimension additionnelle relative à ladite inclinaison de l'assise. Moyennant quoi, la liaison fonctionnelle assise-dossier vient enrichir le domaine de protection de l'occupant ; en effet on peut tolérer une inclinaison dossier plus importante si, en même temps, l'inclinaison de l'assise est accrue.

Selon un aspect particulier, le siège peut être équipé en outre d'un mouvement de pivotement à axe vertical (Mθ), de préférence motorisé. Dans ces conditions, le premier domaine des postures comprend en outre une dimension additionnelle relative audit mouvement de pivotement. Moyennant quoi, on peut admettre par exemple dans le premier domaine de postures un petit pivotement du siège jusqu'à quelques degrés, sans réelle incidence sur l'efficacité des moyens de protection. Toutefois le pivotement maximum autorisé est avantageusement rendu dépendant des conditions contextuelles.

Selon un aspect particulier, il peut être prévu une détection de présence d'un passager arrière (OCCAR) installé derrière l'occupant du siège d'intérêt, la présence effective d'un passager étant prise en compte pour limiter le premier domaine de postures (D1). Moyennant quoi, le premier domaine de postures du siège avant peut être limité pour favoriser une bonne protection de l'occupant arrière et éviter grâce à l'action de sa ceinture de sécurité un contact prononcé de sa tête avec le siège avant.

Selon un aspect particulier, les données anthropométriques personnelles comprennent au moins le poids de l'occupant du siège d'intérêt, ledit poids étant estimé grâce à un capteur de présence et de poids agencé à l'intérieur de l'assise du siège.

Grâce à quoi on peut personnaliser le premier domaine de postures par rapport à l'occupant sans forcément avoir d'autres données concernant l'occupant. Selon la technologie du capteur, on peut utiliser accessoirement des abaques de régression pour obtenir une estimation grossière de la taille de l'occupant par rapport aux informations données par le capteur de présence dans l'assise du siège.

Selon un aspect particulier, les données anthropométriques personnelles peuvent être déduites par un algorithme à partir des positions utilisées par ledit occupant, en situation de conduite dans une fenêtre temporelle récente prédéfinie. On utilise simplement les capteurs de position des mouvements motorisés du siège. Il est ainsi possible d'obtenir des données anthropométriques par apprentissage sans nécessité de capteur spécifique de type caméra ou capteur de poids dans l'assise.

Selon un aspect particulier, il peut être prévu une caméra pour estimer la taille et la corpulence de l'occupant. C'est un moyen simple pour obtenir, après analyse des images, une estimation basique des mesures anthropométriques de l'occupant du siège d'intérêt.

Selon un aspect particulier, l'ensemble d'informations peut comprendre en outre l'une des informations parmi : la position géographique courante, le type de voie sur lequel véhicule est engagé, la vitesse maximale autorisée actuelle, le niveau de luminosité ambiante, les conditions météorologiques actuelles et celles prévues à court terme, les caractéristiques de la portion à venir de l'itinéraire planifié.

On accroît ainsi les fonctionnalités et on obtient une adaptation plus fine aux conditions extrinsèques, avec une fonction d'anticipation lorsque la cartographie routière est utilisée.

On peut aussi utiliser une caméra frontale du véhicule pour détecter l'imminence d'un danger accidentel en vue de restreindre immédiatement le premier domaine de postures.

La présente invention concerne aussi un procédé conforme à la revendication 14.

Les avantages conférés sont identiques à ceux déjà évoqués pour le système plus haut.

Selon un aspect particulier du procédé, le procédé peut comprendre l'étape : e2- interdire un mouvement conduisant à sortir dudit premier domaine de postures.

Selon un aspect particulier du procédé, la détermination du premier domaine de postures (D1) est réalisée en temps réel et les étapes c- à e- sont répétées avec une récurrence élevée, typiquement une période inférieure à 500 ms.

Selon un aspect particulier du procédé, il peut être prévu une étape de détection de présence d'un passager arrière (OCCAR) installé derrière l'occupant du siège d'intérêt, la présence effective d'un passager étant prise en compte pour limiter le premier domaine de postures.

D'autres aspects, buts et avantages de l'invention apparaîtront à la lecture de la description suivante d'un mode de réalisation de l'invention, donné à titre d'exemple non limitatif. L'invention sera également mieux comprise en regard des dessins joints sur lesquels :
- la figure 1 est une vue générale schématique de profil d'un siège de véhicule dans un système selon l'invention,
- la figure 2 est une vue générale en perspective d'une variante du siège de la Figure 1, avec une fonctionnalité de pivotement,
- la figure 3 montre, dans une cartographie à deux dimensions, divers domaines de postures de sécurité, pour les mouvements réglage longitudinal et inclinaison de dossier,
- la figure 4 montre, dans une cartographie à deux dimensions, divers domaines de postures de sécurité, pour les mouvements inclinaison d'assise et inclinaison de dossier,
- la figure 5 montre, dans une cartographie à trois dimensions, divers domaines de postures de sécurité, pour les mouvements réglage longitudinal, inclinaison d'assise et inclinaison de dossier,
- la figure 6 illustre un schéma bloc de principe du système,
- la figure 7 est un diagramme illustrant les flux d'informations prises en compte dans le procédé mis en œuvre dans le système,
- la figure 8 illustre certains cas de fonctionnement du système,
- la figure 9 montre un diagramme général du procédé.

Sur les différentes figures, les mêmes références désignent des éléments identiques ou similaires. Pour des raisons de clarté de l'exposé, certaines détails ne sont pas représentés à l'échelle.

### Siège - fonctionnalités - mouvements - caractéristiques

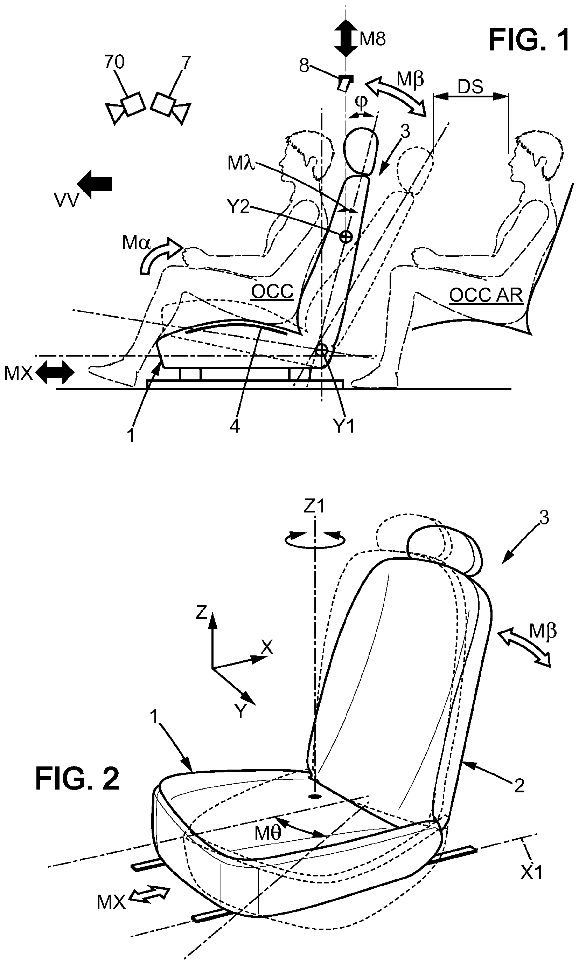

Sur la figure 1 sont représentés de profil un siège avant **3** d'un véhicule automobile dans lequel a pris place un occupant **OCC**, et un passager OCCAR qui se trouve assis juste derrière le siège avant 3.

Dans le présent document, le siège avant est aussi appelé « siège d'intérêt ». Il peut s'agir d'un siège conducteur ou d'un siège passager avant d'un véhicule automobile. Le véhicule automobile en question peut être un véhicule particulier, de tout type de carrosserie, un véhicule utilitaire, sans exclure les poids lourds.

Le siège d'intérêt comprend une assise **1** et un dossier **2**, qui peut être complété par un appui-tête.

Le siège d'intérêt est équipé d'un mouvement de réglage longitudinal noté **MX**, qui est généralement parallèle à la direction de déplacement du véhicule. Le mouvement de réglage longitudinal permet à l'occupant **OCC** de se rapprocher de la planche de bord ou du poste de conduite, ou à l'inverse de s'en éloigner. Si l'occupant est le conducteur du véhicule, ce réglage longitudinal permet à un conducteur d'une morphologie quelconque d'atteindre correctement les pédales ainsi que le volant de conduite. Dans le cadre du présent exposé, le mouvement de réglage longitudinal **MX** est de préférence motorisé (la fonction motorisation est connue en soi). La course de réglage disponible dans la direction longitudinale est typiquement de l'ordre de 200 à 300 mm.

Le siège d'intérêt **3** est également équipé d'un mouvement de réglage d'inclinaison de dossier noté **Mβ**, qui permet à l'occupant **OCC** de pouvoir reculer plus ou moins son buste pour venir en appui sur le dossier (pivotement autour d'un axe transversal noté **Y1**). Dans le cadre du présent exposé, le mouvement de dossier est de préférence motorisé (la fonction motorisation est connue en soi). La course de réglage disponible pour l'inclinaison du dossier est typiquement de l'ordre de 20 à 35 degrés, avec une excursion possible jusqu'à 90 degrés pour des sièges qui peuvent se placer en position couchette. Outre le réglage, il peut être prévu un mécanisme de rabattement vers l'avant pour l'accès aux places arrière, ce mécanisme de rabattement venant by-passer le réglage classique d'inclinaison de dossier.

L'occupant peut utiliser le réglage d'inclinaison pour se placer dans des postures relaxantes voire pour dormir (cas du passager). Dans le contexte des véhicules à délégation de conduite, dans certaines phases, le conducteur n'ayant plus à saisir le volant, il pourrait incliner plus le dossier.

Optionnellement, le siège peut être équipé d'une fonction de rehausse d'assise connue en soi. Dans le cadre du présent exposé, on s'intéresse en particulier à un mouvement d'inclinaison d'assise qui consiste à un mouvement général de pivotement de l'assise pour que la partie antérieure soit plus haute que la partie postérieure ; ce mouvement d'inclinaison d'assise est noté **Mα** à la figure 1. Dans le cadre du présent exposé, le mouvement de réglage d'inclinaison d'assise est de préférence motorisé.

Optionnellement, l'appui-tête du siège peut être équipé d'une fonction de pivotement connue en soi ; ce mouvement pivotement d'appui-tête est noté ϕ à la figure 1.

Optionnellement, il peut être aussi prévu une fonction de pivotement du haut de dossier **Mλ** (axe transeversal **Y2**).

Optionnellement, il peut être aussi prévu une fonction d'ajustement en hauteur de l'ancrage supérieur **8** de la ceinture de sécurité. Le mouvement est repéré **M8** (cf Figure 1).

En référence à la figure 2, le siège peut être équipé optionnellement d'une fonction de pivotement autour d'un axe vertical noté **Mθ**. Cette fonction de pivotement peut consister en une rotation du siège vers l'intérieur du véhicule (fonction salon) ou à l'inverse en une rotation du siège vers l'extérieur du véhicule (fonction accueil). Dans l'exemple illustré, il s'agit d'une rotation simple autour d'un axe noté **Z1** ; toutefois, des cinématiques combinées ou plus complexes peuvent être envisagées. Dans le cadre du présent exposé, le mouvement pivotement vertical est de préférence motorisé.

La direction **X** correspond à la direction longitudinale du véhicule, la direction **Y** correspond à la direction transversale du véhicule, la direction **Z** correspond à la direction verticale du véhicule. La convention de représentation choisie ici pour X : X est croissant lorsque le siège recule.

Le siège possède des caractéristiques intrinsèques : dimensions, réglages, résistance, etc..... Les données caractéristiques sont connues de l'unité de commande notamment les dimensions principales, les courses de réglage de chacun des mouvements. Le système comprend de préférence, sur chacun des mouvements motorisés d'intérêt pour la protection de l'occupant, des capteurs de position (capteur absolu ou encodeur relatif permettant de reconstruire après calcul et intégration la position absolue).

### Occupant - caractéristiques

Le siège peut être équipé d'une fonction de capteur de présence d'occupant, repéré **4.** Ce capteur peut délivrer une information tout ou rien, i.e. Présence ou non présence. Dans certains modes de réalisation, ce capteur peut également délivrer une cartographie de la présence des cuisses sur l'assise (réseau matriciel de points de captation aussi appelé « nappe sensitive »), ce qui permet de fournir une première estimation de la corpulence et de la taille de l'occupant. Dans d'autres réalisations, ce capteur **4** peut fournir en outre une estimation du poids de l'occupant, la nappe sensitive étant équipée de jauges de contrainte.

L'occupant **OCC** du siège d'intérêt, qu'il soit conducteur ou passager, est un individu faisant partie de la population générale. Les données anthropométriques des individus sont très diverses, ce qui nécessite de fournir des courses de réglage pour le siège qui prennent en compte l'ensemble des possibilités que l'on peut trouver dans l'ensemble de la population.

L'ensemble des données se répartissent statistiquement comme connu en soi. On appelle l'individu **U50** un individu théorique médian, **U05** est un individu théorique « 5 percentile », et **U95** est l'individu théorique « 95 percentile ». Si l'on considère les dimensions anatomiques par exemple, **U05** représente les individus les plus petits alors que **U95** représente les individus les plus grands, et **U50** représente l'individu théorique moyen.

S'agissant des données anthropométriques, on s'intéresse au premier ordre à la taille de l'occupant OCC, et au second ordre on s'intéresse au poids l'occupant OCC, c'est-à-dire sa corpulence ou son indice IMC Indice de masse corporelle.

Des données auxiliaires peuvent aussi être comprises dans les données anthropométriques individuelles comme la dimension de chacun des segments anatomiques, l'âge de l'individu, le sexe de l'individu. Dans le contexte de la sécurité passive, les données individuelles intéressantes incluent aussi l'âge de l'individu car en effet la robustesse de certains éléments du squelette dépend significativement de l'âge de l'individu en question (jeune enfant ou vieillard).

Outre la nappe de détection dans l'assise déjà mentionnée plus haut, il peut être prévu en outre ou en alternative une caméra **7** qui permet de prendre des images de l'occupant du siège. Cette caméra peut être logée dans le combiné d'instrument ou dans le rétroviseur intérieur ou ailleurs. L'analyse des images prises par la caméra permet d'avoir une estimation de la taille de la corpulence de l'occupant du siège. Cette caméra peut contribuer par ailleurs à la fonction anti endormissement.

Selon une solution alternative ou complémentaire, les données anthropométriques de l'occupant peuvent provenir du renseignement d'un profil utilisateur ayant été fait préalablement sur une interface de type téléphone intelligent, ordinateur ou tablette.

Dans une version de base du système, l'acquisition de données anthropométriques peut être faite plus simplement notamment en ce qui concerne l'estimation de la taille. En effet, on peut utiliser le réglage moyen de position pour un occupant en position de conduite (cela concerne donc le conducteur) pour en déduire une estimation de sa taille. Ainsi, même en l'absence de capteur spécifique dans l'armature sur une assise, ou d'autre capteur externe comme une caméra, on peut quand même proposer une estimation de la taille de l'occupant OCC. Plus précisément, on peut utiliser la moyenne des réglages utilisés pendant quelques minutes alors que le véhicule est en train de rouler, et en déduire un calcul de réglage longitudinal moyen, l'inclinaison de dossier moyenne. L'unité de commande procède ainsi par apprentissage, et renouvelle l'opération avec une fenêtre temporelle glissante des dernières minutes de conduite de l'occupant.

### Environnement - conditions contextuelles

Le siège d'intérêt est installé à bord d'un véhicule qui se déplace sur la voierie avec une vitesse instantanée notée **VV**. Cette donnée contextuelle est très importante du point de vue sécurité passive, car il est reconnu que pour le risque accidentel, le niveau et la sévérité des dégâts matériels et humains est d'autant plus élevé que la vitesse de circulation est élevée.

Outre la vitesse instantanée, il y a d'autres données ou éléments contextuels qui sont à prendre en compte, par exemple le type de voie parcourue par le véhicule. On comprend aisément du point de vue sécurité que rouler à une vitesse de 80 km/h sur une autoroute rectiligne est tout à fait différent que de rouler à 80 km/h sur une petite route de montagne sinueuse. On peut utiliser une classification connue des voies routières.

Les conditions météorologiques prévalant à l'instant T et à venir à court terme sont aussi une donnée contextuelle importante s'agissant de la protection sécurité passive.

Parmi les autres données contextuelles pertinentes, on peut citer le niveau de luminosité ambiante, l'état de la chaussée, la largeur des voies, le nombre de véhicules se déplaçant sur le même segment routier, dans le même sens et en sens inverse.

Pour les véhicules équipés de systèmes de cartographie, le profil de la voie se présentant devant le véhicule est aussi un paramètre déterminant ; par exemple si la route fait une courbe prononcée à moins de 300 m de la position courante, le niveau de risque accidentel va augmenter.

Il n'est pas exclu d'utiliser aussi d'autres données sur l'accidentologie de certains tronçons routiers pour contraindre plus ou moins le premier domaine de postures D1.

Dans le présent document, on définit par « *ensemble d'informations EC* » l'ensemble des informations décrites ci-dessus, qui ont une pertinence certaine ou élevée concernant les prescriptions de sécurité passive et le risque accidentel.

Dans le contexte du présent document, il faut interpréter ledit « ensemble d'informations » de façon très large ; c'est-à-dire ledit ensemble d'informations peut contenir uniquement la vitesse véhicule VV, ou peut contenir d'autres informations auxiliaires comme évoqué plus haut.

### Mode opératoire -système et logique fonctionnelle

On détermine, pour le siège d'intérêt **3** un premier domaine de postures **D1**, qui définit un ensemble de postures recommandées de sécurité pour parer à un événement de sécurité passive pour l'occupant **OCC** installé dans le siège, et pour les conditions contextuelles à l'instant T.

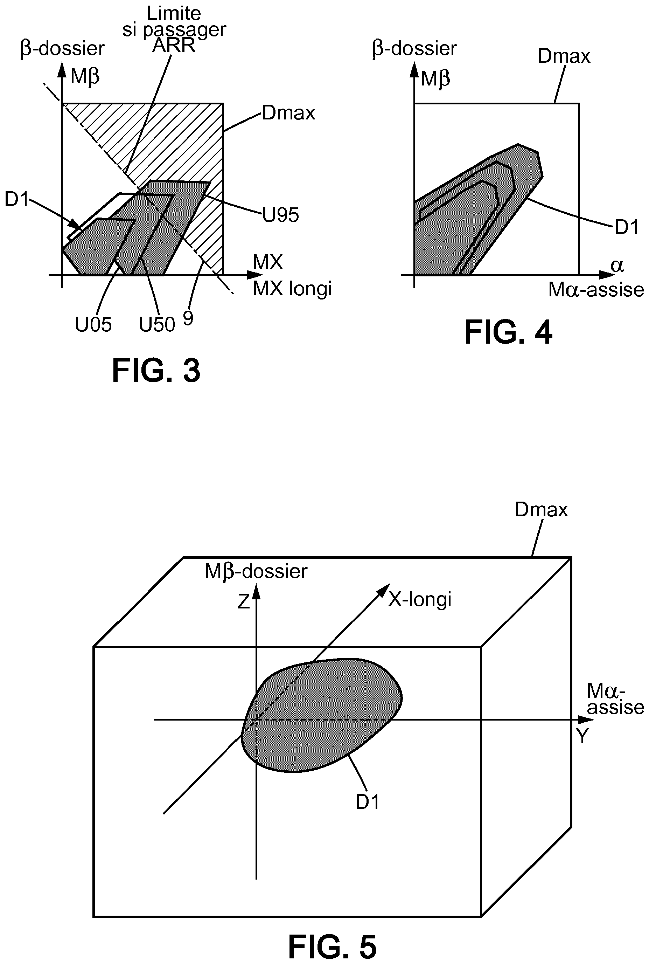

Ce premier domaine de postures **D1** est représenté graphiquement aux figures 3,4,5.

**Dmax** représente le domaine couvert par l'entièreté des courses de réglage disponibles.

La figure 3 montre un exemple simple avec seulement deux mouvements pris en compte, à savoir réglage longitudinal et inclinaison de dossier. L'axe des abscisses représente le recul du siège et l'axe des ordonnées représente l'inclinaison du dossier vers l'arrière du siège.

La figure 4 illustre la corrélation entre l'inclinaison de dossier et d'inclinaison d'assise, ce qui autorise une inclinaison de dossier plus prononcée si une inclinaison d'assise la complète. L'axe des abscisses représente l'inclinaison d'assise vers l'arrière et l'axe des ordonnées représente l'inclinaison du dossier vers l'arrière.

La figure 5 montre un exemple avec trois degrés de liberté pris en compte à savoir réglage longitudinal, inclinaison de dossier, et inclinaison d'assise. L'axe X représente le recul du siège, l'axe Y représente l'inclinaison d'assise vers l'arrière et l'axe Z représente l'inclinaison du dossier vers l'arrière. **D1** et **Dmax** sont ici alors des volumes conventionnels au sens de la géométrie.

Bien entendu, le nombre de dimensions ne se limite pas à trois, le premier domaine de postures **D1** peut être basé sur une définition à quatre degrés de liberté, voire plus.

Dans des sièges grands confort, le nombre de mouvements motorisés pris en compte dans le premier domaine de postures **D1** peut être élevé, par exemple on peut avoir : un mouvement de réglage longitudinal **MX,** un mouvement de réglage d'inclinaison de dossier **Mβ**, un mouvement d'inclinaison d'assise est noté **Mα**, un mouvement de réglage en hauteur de ceinture de sécurité **M8**, un mouvement de pivotement autour d'un axe vertical noté **Mθ**, un mouvement pivotement d'appui-tête noté **ϕ**, un pivotement du haut de dossier **Mλ**.

On remarque que le domaine de postures autorisées D1 est délimité par une bordure et se présente sous la forme d'une aire, d'un volume ou d'un hyper volume (cas de plus trois dimensions, non représenté). Les postures situées à l'intérieur du premier domaine D1 sont propices à une bonne protection de l'occupant ; à l'inverse des postures situées à l'extérieur du premier domaine sont sous-optimales par rapport à la protection de l'occupant. Par exemple une inclinaison tout prononcée du dossier favorise un effet toboggan en cas de crash (glissade, sous-marinage), une position trop près du volant ne permet pas une protection efficace par le sac gonflable airbag et par la ceinture de sécurité ; un siège trop pivoté ne permet pas un bon fonctionnement de la ceinture de sécurité.

On remarque que le volume (au sens large) de **D1** est un domaine *connexe* c'est-à-dire fermé par une seule et unique frontière extérieure continue.

Dans une version de base, le premier domaine de postures **D1** est défini essentiellement en fonction des données anthropométriques de l'occupant OCC et des caractéristiques intrinsèques du siège. Toutefois, en cas de changement d'occupant sur le siège, le premier domaine de postures est recalculé et peut être très différent du précédent.

Dans le cas où on utilise des informations contextuelles comme par exemple la vitesse véhicule VV, ce premier domaine **D1** est défini en temps réel, en fonction de l'ensemble d'informations EC contextuelles, des mesures anthropométriques, et des caractéristiques intrinsèques du siège.

Ainsi, par exemple on acceptera que si le véhicule est à vitesse nulle (VV=0), par exemple garé sur le bord de la route en attente au feu rouge, le premier domaine de postures englobe des positions de dossier très inclinées. À l'inverse, lorsque le véhicule roule à vive allure, les inclinaisons de dossier comprises dans le premier domaine de postures sont beaucoup plus restreintes, par exemple un intervalle de seulement 10 degré autour d'une position de confort estimé au vu des données anthropométriques de l'occupant présent sur le siège.

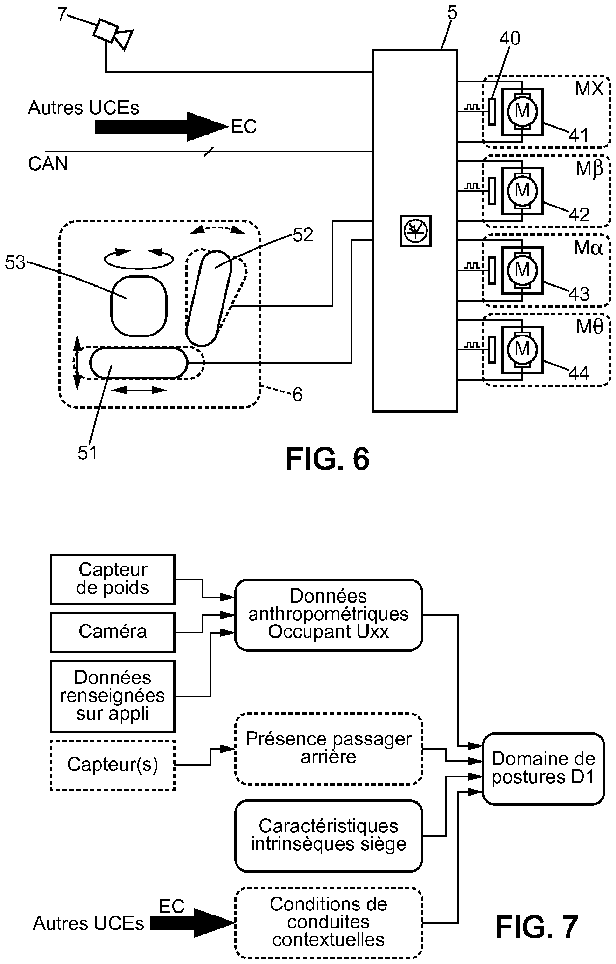

Sur la figure 6, le système proposé selon la présente invention comprend une unité de commande **5**, une interface utilisateur **6** pour la commande manuelle des positions du siège, des moto-réducteurs **41,42,43,44** pilotant le déplacement de chacun des mouvements ou degrés de liberté du siège.

Chaque moteur est associé à un capteur de position **40** (commande en boucle fermée) de manière à ce que l'unité de commande puisse connaître en permanence les positions de réglage courantes du siège. L'unité de commande **5** peut ainsi comparer en permanence les positions de réglage sur chacun des degrés de liberté et les comparer au premier domaine de postures **D1**.

Comme illustré sur la figure 6, l'unité de commande **5** reçoit des informations contextuelles en provenance d'autres unités à bord du véhicule comme par exemple en provenance du calculateur de navigation et ou de la caméra déjà mentionnée plus haut.

Selon un exemple illustré, l'interface utilisateur **6,** comprend un bouton **51** pour régler la position longitudinale, un bouton **52** pour régler l'inclinaison de dossier un bouton **53** pour faire pivoter un siège. Toute autre configuration interface utilisateur peut aussi être utilisée.

L'unité de commande **5** détermine en permanence en temps réel le premier domaine de postures ; par ailleurs l'unité de commande 5 connaît en permanence les positions courantes de réglage des mouvements et degrés de liberté du siège.

Avantageusement, il est prévu, dans le cas où la posture courante (à savoir les réglages des différents mouvements) se trouve en dehors du premier domaine de postures, le système génère une correction automatique pour revenir à l'intérieur du premier domaine et optionnellement un avertissement sonore et/ou visuel à destination de l'occupant

. La décision est prise par l'unité de commande **5**, mais la mise en oeuvre peut être confiée à une autre entité à bord du véhicule.

Il peut en outre être prévu un avertissement sonore sous la forme d'un bip d'autant plus fort que la position courante est éloignée du domaine des postures **D1**.

L'avertissement peut aussi prendre la forme de vibrations communiquées aux conducteurs dans le siège (e.g. dispositif vibrant comme déjà utilisé dans les systèmes d'alerte de franchissement de ligne).

S'agissant de la correction automatique, l'unité de commande peut commander d'elle-même un retour vers une inclinaison moins prononcée du dossier ou une correction du réglage longitudinal, en fonction de la restriction du premier domaine de postures. A l'inverse lorsque le premier domaine de postures se ré-élargit, aucune correction n'est nécessaire.

La taille et les contours du premier domaine de postures **D1** évolue en fonction des conditions contextuelles soit de manière continue, soit sur des bases d'une définition discontinue (on a alors un saut d'un domaine prédéfini à un autre).

Il peut s'agir d'une cartographie multidimensionnelle, à quatre dimensions ou plus.

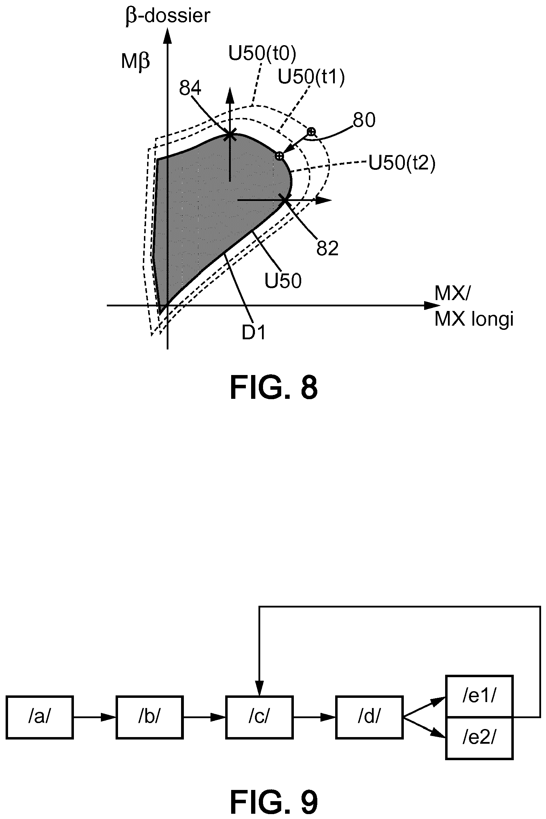

Sur la figure 8, on a représenté un cas où le premier domaine de postures D1 se rétrécit en fonction du temps pour l'individu médian **U50**.

A **t1**, D1 est plus petit qu'à **t0** ; à **t2**, D1 est plus petit qu'à **t1**. Un tel rétrécissement peut par exemple être induit par une accélération du véhicule.

La correction automatique est illustrée par la flèche **80**. On remarque que la correction automatique peut mettre en jeu deux commandes simultanées (X et β) sur deux degrés de liberté ou plus ; ceci permet de réagir au plus vite en cas de restrictions soudaines du premier domaine de postures (apparition brusque d'une situation accidentogène).

On voit aussi qu'à l'instant **t2**, si le conducteur commande un recul du siège, l'unité de commande peut stopper le mouvement à la position **82** pour éviter une sortie du premier domaine de postures. De même, si le conducteur commande une inclinaison du siège, l'unité de commande peut stopper le mouvement à la position **84** pour éviter une sortie du premier domaine de postures.

### Cas particulier de la présence de passager arrière

Selon un aspect optionnel de la présente invention, la présence d'un passager installé derrière le siège d'intérêt peut en outre être prise en compte.

En effet, une inclinaison et ou un recul trop prononcé du siège avant peut conduire à une distance de sécurité (voir **DS** en figure 1) insuffisante par rapport au buste et à la tête du passager arrière **OCCAR**.

La présence d'un passager à l'arrière introduit une contrainte complémentaire sur le premier domaine de postures. Ceci est illustré à la figure 3, la courbe **9** illustrant la limite X+β à ne pas franchir. On a représenté une droite, mais bien entendu une limite courbe est aussi possible.

La présence du passager arrière peut être détectée soit par le bouclage de la ceinture, soit par l'utilisation d'une nappe sensitive comme décrite plus haut pour le siège avant, soit encore à partir d'une caméra et de l'analyse des images captées par cette caméra.

### Points divers

Dans les circonstances ou l'occupant quitte le siège, et qu'une nouvelle personne peut s'installer sur le siège, le système doit mettre à jour ensemble des données anthropométriques pour s'adapter au nouvel occupant du siège.

Les conditions contextuelles prises en compte dans l'ensemble EC peuvent aussi englober la connaissance de la circulation des autres véhicules qui sont amenés à croiser et/ou doubler le véhicule équipé du siège d'intérêt. On peut ainsi prendre en compte, outre les zones géographiques accidentogènes connues des statistiques, une appréciation temps réel du risque lié à la circulation des véhicules et/ou des piétons.

Selon un aspect optionnel, il peut être prévu une ou plusieurs caméras **70** qui permettent de surveiller les alentours du véhicule pour les différents systèmes d'aide à la conduite. Grâce à quoi, une situation accidentelle imminente peut être reconnue par les caméras, auquel cas le premier domaine de postures D1 est restreint sans délai et une correction automatique est effectuée si nécessaire pour que la posture se trouve à l'intérieur du premier domaine et qu'ainsi la protection de l'occupant soit optimale. On parle ici d'une fenêtre temporelle de une à trois secondes avant un impact éventuel, ce qui donne assez de temps pour faire bouger le siège par une correction automatique, avec avantageusement plusieurs mouvements commandés simultanément comme déjà évoqué plus haut.

## Revendications

1. Système pour véhicule comprenant au moins un siège d'intérêt (3) avec une assise (1) et un dossier (2), ledit siège étant un siège avant du véhicule, et une unité de commande (5), le siège d'intérêt comprenant au moins deux mouvements de réglage motorisés, à savoir un mouvement de réglage longitudinal (MX), et un mouvement de réglage d'inclinaison de dossier (Mβ), les différentes possibilités de réglages définissant chacune une posture pour un occupant (OCC) du siège d'intérêt, l'occupant du siège d'intérêt présentant des mesures anthropométriques personnelles (U05,U50,U95), ledit siège d'intérêt autorisant des possibilités de réglage, comprenant une course angulaire de réglage d'inclinaison du dossier d'au moins 20 degrés,
dans lequel l'unité de commande reçoit par d'autres unités du véhicule un ensemble d'informations (EC), ledit ensemble d'informations comprenant au moins la vitesse instantanée du véhicule (VV),
le système étant caractérisé en ce l'unité de commande est configurée pour déterminer, pour le siège d'intérêt au moins un premier domaine de postures (D1), le premier domaine de postures étant défini comme un volume enveloppe dans l'espace des deux mouvements de réglage ou plus,
ce premier domaine définissant un ensemble de postures recommandées de sécurité pour parer à un événement de sécurité passive pour l'occupant (OCC) installé dans le siège, dans lequel le premier domaine de postures est redéfini en permanence en temps réel par l'unité de commande (5) en fonction de conditions connues de l'ensemble d'informations (EC), et en fonction des mesures anthropométriques de l'occupant (OCC), et des caractéristiques intrinsèques du siège, le premier domaine de postures se rétrécissant lorsque la vitesse instantanée du véhicule du véhicule augmente,
et en ce que l'unité de commande est configurée pour commander, lorsque le premier domaine de postures se rétrécit, une correction automatique pour revenir à l'intérieur du premier domaine de postures.

2. Système selon la revendication 1, dans lequel il est en outre prévu, dans le cas où la posture courante se trouve à l'intérieur du premier domaine de postures (D1), une interdiction de mouvement conduisant à sortir du premier domaine de postures.

3. Système selon l'une des revendications 1 à 2, dans lequel le mouvement de réglage d'inclinaison de dossier (Mβ) présente une course angulaire de 90 degrés.

4. Système selon l'une des revendications 1 à 3, dans lequel l'unité de commande (5) effectue la correction automatique pour revenir à l'intérieur du premier domaine de postures en commandant simultanément les au moins deux mouvements de réglage.

5. Système selon l'une des revendications 1 à 4, dans lequel l'ensemble d'informations (EC) comprend, outre la vitesse instantanée du véhicule (VV), au moins l'un parmi :
- le type de voie parcourue par le véhicule,
- les conditions météorologiques qui prévalent,
- le profil de la voie se présentant devant le véhicule,
- le niveau de luminosité ambiante, l'état de la chaussée, la largeur des voies, le nombre de véhicules se déplaçant sur le même segment routier, dans le même sens et en sens inverse.

6. Système selon l'une des revendications 1 à 5, dans lequel l'unité de commande (5) est configurée pour commander les motorisations des mouvements du siège en fonction de commandes manuelles faites par le conducteur et en fonction du premier domaine de postures (D1).

7. Système selon l'une des revendications 1 à 6, dans lequel le siège est équipé en outre d'une fonction d'inclinaison d'assise (Mα).

8. Système selon l'une des revendications 1 à 7, dans lequel le siège est équipé en outre d'un mouvement de pivotement à axe vertical (Mθ).

9. Système selon l'une des revendications 1 à 8, dans lequel il est prévu une détection de présence d'un passager arrière (OCCAR) installé derrière l'occupant du siège d'intérêt, la présence effective d'un passager étant prise en compte pour limiter le premier domaine de postures (D1).

10. Système selon l'une des revendications 1 à 9, dans lequel les données anthropométriques personnelles comprennent au moins le poids de l'occupant du siège d'intérêt, ledit poids étant estimé grâce à un capteur de présence et de poids (4) agencé à l'intérieur de l'assise (1) du siège.

11. Système selon l'une des revendications 1 à 9, dans lequel les données anthropométriques personnelles sont déduites par un algorithme à partir des positions utilisées par ledit occupant (OCC), en situation de conduite dans une fenêtre temporelle récente prédéfinie.

12. Système selon l'une des revendications 1 à 11, dans lequel il est prévu une caméra (7) pour estimer la taille et la corpulence de l'occupant.

13. Système selon la revendication 3, dans lequel l'ensemble d'informations (EC) comprend, outre la vitesse véhicule, l'une des informations parmi : la position géographique courante, le type de voie sur lequel véhicule est engagé, la vitesse maximale autorisée actuelle, le niveau de luminosité ambiante, les conditions météorologiques actuelles et celles prévues à court terme, les caractéristiques de la portion à venir de l'itinéraire planifié.

14. **Procédé** mis en oeuvre dans un système comprenant au moins un siège d'intérêt (3), avec une assise (1) et un dossier (2), ledit siège étant un siège avant d'un véhicule, et une unité de commande (5), le siège d'intérêt comprenant au moins deux mouvements de réglage motorisés, à savoir un mouvement de réglage longitudinal (MX), et un mouvement de réglage d'inclinaison de dossier (Mβ), ledit siège d'intérêt autorisant des possibilités de réglage, comprenant une course angulaire de réglage d'inclinaison du dossier d'au moins 20 degrés, le procédé comprenant :
**a-** obtenir les caractéristiques intrinsèques du siège d'intérêt (3),
**b-** acquérir des mesures anthropométriques personnelles relative à un occupant (OCC) du siège,
**c-** acquérir un ensemble d'informations (EC) mis à disposition par d'autres unités du véhicule, ledit ensemble d'informations comprenant au moins la vitesse instantanée (VV) et utiliser cet ensemble d'informations pour déterminer le premier domaine de postures,
**d-** déterminer, pour le siège d'intérêt au moins un premier domaine de postures (D1), le premier domaine de postures étant déterminé en temps réel, en fonction de conditions connues de l'ensemble d'informations (EC), le premier domaine de postures se rétrécissant lorsque la vitesse instantanée du véhicule du véhicule augmente
**e1-** dans le cas où la posture courante se trouve en dehors du premier domaine de postures, commander une correction automatique pour revenir à l'intérieur du premier domaine de postures (D1).

15. Procédé selon la revendication 14, dans lequel la correction automatique pour revenir à l'intérieur du premier domaine de postures est effectuée en commandant simultanément les au moins deux mouvements de réglage.

## Patentansprüche

1. Fahrzeugsystem mit wenigstens einem Sitz von Interesse (3) mit einer Sitzfläche (1) und einer Rückenlehne (2), wobei der Sitz ein Vordersitz des Fahrzeugs ist, und mit einer Steuereinheit (5), wobei der Sitz von Interesse wenigstens zwei motorisierte Einstellbewegungen aufweist, nämlich eine Bewegung zur Längsverstellung (MX) und eine Bewegung zur Einstellung der Rückenlehnenneigung (Mβ), wobei die verschiedenen Einstellmöglichkeiten jeweils eine Körperhaltung für einen Benutzer (OCC) des Sitzes von Interesse definieren, wobei der Benutzer des Sitzes von Interesse persönliche anthropometrische Maße (U05, U50, U95) aufweist, wobei der Sitz von Interesse Einstellmöglichkeiten zulässt, die einen Winkelhub der Einstellung der Rückenlehnenneigung von wenigstens 20 Grad umfassen,
wobei die Steuereinheit von anderen Einheiten des Fahrzeugs einen Satz von Informationen (EC) empfängt, wobei der Satz von Informationen wenigstens die momentane Geschwindigkeit des Fahrzeugs (VV) umfasst,
wobei das System **dadurch gekennzeichnet ist, dass** die Steuereinheit dazu ausgebildet ist, für den Sitz von Interesse wenigstens einen ersten Bereich von Körperhaltungen (D1) zu bestimmen, wobei der erste Bereich von Körperhaltungen als ein räumlich umhülltes Volumen der zwei oder mehr Einstellbewegungen definiert ist,
wobei der erste Bereich einen Satz von empfohlenen Sicherheitskörperhaltungen definiert, um ein passives Sicherheitsereignis für den im Sitz befindlichen Benutzer (OCC) zu bewältigen, wobei der erste Bereich von Körperhaltungen ständig in Echtzeit von der Steuereinheit (5) in Abhängigkeit von bekannten Bedingungen des Satzes von Informationen (EC) und in Abhängigkeit von anthropometrischen Maßen des Benutzers (OCC), und den intrinsischen Eigenschaften des Sitzes neu definiert wird, wobei sich der erste Bereich von Körperhaltungen mit zunehmender momentaner Geschwindigkeit des Fahrzeugs verkleinert,
und wobei, wenn sich der erste Bereich von Körperhaltungen verkleinert, die Steuereinheit dazu ausgebildet ist, eine automatische Korrektur zur Rückkehr in den ersten Bereich von Körperhaltungen zu steuern.

2. System nach Anspruch 1, wobei für den Fall, dass sich die aktuelle Körperhaltung innerhalb des ersten Bereichs von Körperhaltungen (D1) befindet, zusätzlich ein Bewegungsverbot vorgesehen ist, das zum Verlassen des ersten Körperhaltungsbereichs führt.

3. System nach einem der Ansprüche 1 oder 2, wobei die Bewegung zur Einstellung der Rückenlehnenneigung (Mβ) einen Winkelhub von 90 Grad aufweist.

4. System nach einem der Ansprüche 1 bis 3, wobei die Steuereinheit (5) die automatische Korrektur zur Rückkehr in den ersten Körperhaltungsbereich durch gleichzeitiges Steuern der wenigstens zwei Einstellbewegungen durchführt.

5. System nach einem der Ansprüche 1 bis 4, wobei der Satz von Informationen (EC) neben der momentanen Geschwindigkeit des Fahrzeugs (VV) wenigstens eine der folgenden Informationen enthält:
- die Art der vom Fahrzeug befahrenen Strecke,
- die vorherrschenden meteorologischen Bedingungen,
- das Profil der vor dem Fahrzeug liegenden Fahrbahn,
- den Grad der Umgebungshelligkeit, den Zustand der Straße, die Breite der Fahrbahnen sowie die Anzahl der Fahrzeuge, die sich auf demselben Straßenabschnitt in derselben Richtung und in entgegengesetzter Richtung bewegen.

6. System nach einem der Ansprüche 1 bis 5, wobei die Steuereinheit (5) dazu ausgebildet ist, die Motorisierungen der Sitzbewegungen in Abhängigkeit von manuellen Befehlen des Fahrers und in Abhängigkeit von dem ersten Bereich von Körperhaltungen (D1) zu steuern.

7. System nach einem der Ansprüche 1 bis 6, wobei der Sitz zusätzlich mit einer Sitzneigungsfunktion (Mα) ausgestattet ist.

8. System nach einem der Ansprüche 1 bis 7, wobei der Sitz zusätzlich mit einer Schwenkbewegung um eine vertikale Achse (Mθ) ausgestattet ist.

9. System nach einem der Ansprüche 1 bis 8, wobei eine Erkennung der Anwesenheit eines hinter dem Benutzer des Sitzes von Interesse sitzenden hinteren Passagiers (OCCAR) vorgesehen ist, wobei die tatsächliche Anwesenheit eines Passagiers bei der Begrenzung des ersten Bereichs von Körperhaltungen (D1) berücksichtigt ist.

10. System nach einem der Ansprüche 1 bis 9, wobei die persönlichen anthropometrischen Daten wenigstens das Gewicht des Benutzers des Sitzes von Interesse umfassen, wobei das Gewicht mit Hilfe eines im Inneren der Sitzfläche (1) des Sitzes angeordneten Anwesenheits- und Gewichtssensors (4) geschätzt wird.

11. System nach einem der Ansprüche 1 bis 9, wobei die persönlichen anthropometrischen Daten durch einen Algorithmus aus den Positionen abgeleitet werden, die der Benutzer (OCC) in einer Fahrsituation innerhalb eines vordefinierten Zeitfensters in der jüngeren Vergangenheit verwendet hat.

12. System nach einem der Ansprüche 1 bis 11, wobei eine Kamera (7) zur Schätzung der Größe und des Körperbaus des Benutzers vorgesehen ist.

13. System nach Anspruch 3, wobei der Satz von Informationen (EC) neben der Fahrzeuggeschwindigkeit eine der folgenden Informationen umfasst: die aktuelle geografische Position, die Art der Fahrbahn, auf dem sich das Fahrzeug befindet, die aktuelle zulässige Höchstgeschwindigkeit, den Grad der Umgebungshelligkeit, die aktuellen und kurzfristig erwarteten meteorologischen Bedingungen, die Eigenschaften des nächsten Abschnitts der geplanten Route.

14. **Verfahren,** welches in einem System implementiert ist, das wenigstens einen Sitz von Interesse (3) mit einer Sitzfläche (1) und einer Rückenlehne (2) umfasst, wobei der Sitz ein Vordersitz eines Fahrzeugs ist, und eine Steuereinheit (5) umfasst, wobei der Sitz von Interesse wenigstens zwei motorisierte Einstellbewegungen umfasst, nämlich eine Bewegung zur Längsverstellung (MX) und eine Bewegung zur Einstellung der Rückenlehnenneigung (Mβ), wobei der Sitz von Interesse Einstellmöglichkeiten zulässt, die einen Winkelhub der Rückenlehnenneigungsverstellung von wenigstens 20 Grad umfassen, wobei das Verfahren umfasst:
a) Erfassen der intrinsischen Merkmale des Sitzes von Interesse (3),
b) Erfassen persönlicher anthropometrischer Maße eines Benutzers (OCC) des Sitzes,
c) Erfassen eines Satzes von Informationen (EC), die von anderen Einheiten des Fahrzeugs zur Verfügung gestellt werden, wobei der Satz von Informationen wenigstens die momentane Geschwindigkeit (VV) umfasst, und Verwenden dieses Satzes von Informationen, um den ersten Bereich von Körperhaltungen zu bestimmen,
d) Bestimmen wenigstens eines ersten Bereichs von Körperhaltungen (D1) für den Sitz von Interesse, wobei der erste Bereich von Körperhaltungen in Echtzeit bestimmt wird, in Abhängigkeit von bekannten Bedingungen des Satzes von Informationen (EC), wobei sich der erste Bereich von Körperhaltungen verkleinert, wenn die momentane Geschwindigkeit des Fahrzeugs des Fahrzeugs zunimmt,
e1) für den Fall, dass die aktuelle Körperhaltung außerhalb des ersten Bereichs von Körperhaltungen liegt, eine automatische Korrektur zur Rückkehr in den ersten Bereich von Körperhaltungen (D1) anordnen.

15. Verfahren nach Anspruch 14, wobei die automatische Korrektur zur Rückkehr in den ersten Bereich von Körperhaltungen durch gleichzeitiges Steuern der wenigstens zwei Einstellbewegungen durchgeführt wird.

## Claims

1. A system for a vehicle comprising at least one seat of interest (3) with a seating portion (1) and a backrest (2), said seat being a front seat of the vehicle, and a control unit (5), the seat of interest comprising at least two motorised adjustment movements, namely a longitudinal adjustment movement (MX) and a backrest tilt adjustment movement (Mβ), the different adjustment possibilities each defining a posture for an occupant (OCC) of the seat of interest, the occupant of the seat of interest having personal anthropometric measures (U05, U50, U95), said seat of interest allowing adjustment possibilities, comprising a backrest tilt adjustment angular travel of at least 20 degrees,
wherein the control unit receives from other units of the vehicle a set of information (EC), said set of information comprising at least the instantaneous speed of the vehicle (VV),
the system being **characterised in that** the control unit is configured to determine, for the seat of interest at least a first field of postures (D1), the first field of postures being defined as a dimensional volume encompassing two or more adjustment movements,
this first field defining a set of recommended safety postures to counter a passive safety event for the occupant (OCC) installed in the seat, wherein the first field of postures is continuously redefined by the control unit (5) in real time as a function of conditions known from the set of information (EC), and as a function of the anthropometric measurements of the occupant (OCC) and the intrinsic characteristics of the seat, the first field of postures shrinking when the instantaneous speed of the vehicle increases,
and **in that** the control unit is configured to control, when the first field of postures shrinks, an automatic correction to return inside the first field of postures.

2. The system according to claim 1, wherein there is further provided, in the case where the current posture is within the first field of postures (D1), a prohibition of movement that would result in exiting the first field of postures.

3. The system according to one of claims 1 to 2, wherein the backrest tilt adjustment movement (Mβ) has an angular travel of 90 degrees.

4. The system according to one of claims 1 to 3, wherein the control unit (5) performs the automatic correction to return inside the first field of postures by controlling the at least two adjustment movements simultaneously.

5. The system according to one of claims 1 to 4, wherein the set of information (EC) comprises, in addition to the instantaneous speed of the vehicle (VV), at least one of:
- the type of road travelled by the vehicle,
- the prevailing weather conditions,
- the profile of the road in front of the vehicle,
- the level of ambient light, the state of the roadway, the width of the roads, the number of vehicles moving on the same road segment, in the same direction and in the opposite direction.

6. The system according to one of claims 1 to 5, wherein the control unit (5) is configured to control the motorisations of the seat movements according to manual commands given by the driver and as a function of the first field of postures (D1).

7. The system according to one of claims 1 to 6, wherein the seat is further equipped with a seating portion tilt function (Mα).

8. The system according to one of claims 1 to 7, wherein the seat is further equipped with a pivoting movement about a vertical axis (Mθ).

9. The system according to one of claims 1 to 8, wherein detection of the presence of a rear passenger (OCCAR) installed behind the occupant of the seat of interest is provided, the actual presence of a passenger being taken into account to restrict the first field of postures (D1).

10. The system according to one of claims 1 to 9, wherein the personal anthropometric data comprise at least the weight of the occupant of the seat of interest, said weight being estimated by means of a presence and weight sensor (4) arranged inside the seating portion (1) of the seat.

11. The system according to one of claims 1 to 9, wherein the personal anthropometric data are deduced by an algorithm, from the positions used by said occupant (OCC) in a driving situation within a predefined recent time window.

12. The system according to one of claims 1 to 11, wherein a camera (7) is provided for estimating the size and build of the occupant.

13. The system according to claim 3, wherein the set of information (EC) comprises, in addition to the vehicle speed, one of the following items of information: the current geographical position, the type of road on which the vehicle is travelling, the current authorised maximum speed, the level of ambient light, the current weather conditions and those predicted for the short-term, the characteristics of the upcoming portion of the planned route.

14. **A method** implemented in a system comprising at least one seat of interest (3) with a seating portion (1) and a backrest (2), said seat being a front seat of a vehicle, and a control unit (5), the seat of interest comprising at least two motorised adjustment movements, namely a longitudinal adjustment movement (MX) and a backrest tilt adjustment movement (Mβ), said seat of interest allowing adjustment possibilities, comprising a backrest tilt adjustment angular travel of at least 20 degrees, the method comprising:
**a-** obtaining the intrinsic characteristics of the seat of interest (3),
**b-** acquiring personal anthropometric measurements relating to an occupant (OCC) of the seat,
**c-** acquiring a set of information (EC) made available by other units of the vehicle, said set of information comprising at least the instantaneous speed (VV) and using this set of information to determine the first field of postures,
**d-** determining, for the seat of interest, at least a first field of postures (D1), the first field of postures being determined in real time as a function of conditions known from the set of information (EC), the first field of postures shrinking when the instantaneous speed of the vehicle increases
**e1**- in the case where the current posture is outside the first field of postures, controlling an automatic correction to return inside the first field of postures (D1).

15. The method according to claim 14, wherein the automatic correction to return inside the first field of postures is performed by controlling the at least two adjustment movements simultaneously.
